# EUROPEAN PATENT SPECIFICATION

(11) **EP 0 403 542 B1**
(45) Date of publication and mention of the grant of the patent: **16.10.1996**
(21) Application number: 89903646.1
(22) Date of filing: 04.03.1989
(51) Int. Cl.: C08J 3/22, C08L 27/08, C08K 3/00

(54) **EXTRUSION FORMULATION PACKAGE FOR POLYVINYLIDENE CHLORIDE INTERPOLYMERS AND POLYVINYLIDENE CHLORIDE COMPOSITION CONTAINING SAID PACKAGE**
FORMULIERUNGSPAKET ZUR EXTRUSION VON VINYLIDENCHLORIDINTERPOLYMERISATEN UND DIESES PAKET ENTHALTENDE POLYVINYLIDENCHLORIDZUSAMMENSETZUNG
ENSEMBLE DE FORMULATION D'EXTRUSION POUR RESINES DE VINYLIDENE CHLORIDE, ET COMPOSITION DE POLYVINYLIDENE CHLORIDE CONTENANT CET ENSEMBLE

(30) Priority: 07.03.1988 US 164741
(43) Date of publication of application: 27.12.1990
(73) Proprietor: THE DOW CHEMICAL COMPANY, Midland Michigan 48640-1967 (US)
(72) Inventor: HALL, Mark, J., Midland, MI 48640 (US); JENKINS, Steven, R., Midland, MI 48640 (US); BETSO, Stephen, R., Midland, MI 48640 (US); KIRKPATRICK, Donald, E., Midland, MI 48640 (US); STEVENSON, James, A., Midland, MI 48640 (US); ROSS, Robert, P., Midland, MI 48640 (US)
(74) Representative: Burford, Anthony Frederick
(86) International application number: US8900887
(87) International publication number: WO8908680

(56) References cited:
- WO-A-89/03411
- WO-A-89/03412
- WO-A-89/03858
- US-A- 3 261 793
- US-A- 3 707 590
- US-A- 3 862 066
- US-A- 3 891 598
- US-A- 4 048 428
- US-A- 4 132 691
- US-A- 4 203 880
- US-A- 4 248 747
- TASCHENBUCH DER KUNSTSTOFF-ADDITIVE, Gächter/Müller (eds.), 2nd ed., 1983; p. 333
- POLYMER ENGINEERING & SCIENCE, vol. 33, no. 19, 1993; D.E. KIRKPATRICK et al., pp. 1261-1269

## Description

The present invention relates to melt extrusion of polyvinylidene interpolymers which are relatively thermally sensitive. Specifically, the polyvinylidene chloride interpolymer decomposes to form carbonaceous material (i.e., a variety of dark and intensely-colored species) by two routes: (1) an endothermic dehydrochlorination of the original interpolymer to form hydrogen chloride (HCl) and a polychloroacetylene moiety and (2) an exothermic dehydrochlorination of the polychloroacetylene moiety to form more HCl and non-graphitic carbon. It particularly relates to interpolymers containing vinylidene chloride units in an amount from 60 to 99 weight percent.

The present invention does not relate to the melt extrusion of polyvinyl chloride interpolymers which are relatively thermally insensitive.
Specifically, the polyvinyl chloride interpolymer decomposes to form carbonaceous material by two routes: (1) an endothermic dehydrohalogenation of the original polymer to form hydrogen chloride and a polyacetylenic moiety and (2) an endothermic dehydrogenation of the polyacetylenic moiety to form H₂ and graphite carbon.

The invention also relates to a specific extrusion formulation package for blending with the foregoing category of resins; the use of the formulation package in preparing intermediate pellets and/or shaped articles, such as films, having low non-graphitic carbon content; and the intermediate and final products obtained.

Vinylidene chloride interpolymers are well-known in the prior art. Such polymers are also well-known to be thermally unstable, which means that upon exposure to desirable processing temperatures such polymers tend to generate undesirable physical properties such as an increased level of carbonaceous material contamination, evolve hydrogen chloride, and have poor extrudability, e.g., discoloration.

In the past, the practice has been to extrude the vinylidene chloride interpolymer directly from the form in which it is recovered. Because of the convenience of shipping and handling, it is desirable to form the vinylidene chloride interpolymer into pellets prior to final extrusion. As the demand for pellets has increased, the demand has increased for a pellet which can withstand the myriad processing conditions to which powdered resins are subjected.

While pellets of thermally sensitive polymeric compositions may be an advantageous form from which to fabricate articles, such pellets of thermally sensitive polymeric compositions are particularly difficult to extrude. Pellet formation requires an exposure of the thermoplastic composition to heat prior to the conventional extrusion step of the polymeric composition into articles. This additional heat history is believed to make the polymeric composition in pellet form more susceptible to thermal instability. Consequently, additive packages which improve the thermal stability of thermally sensitive polymeric compositions in powder form do not necessarily improve the thermal stability of thermally sensitive polymeric compositions in pellet form.

Although satisfactorily extrudable for a period, it has been found that attempts to extrude vinylidene chloride interpolymer pellets over long periods on certain extrusion equipment have also proven unsatisfactory due to an undesirable level of carbonaceous material contamination, increased discoloration, or higher hydrogen chloride in the extrudate.

In an effort to improve the extrudability of polymeric compositions comprising vinylidene chloride interpolymers, such compositions are fabricated, in either powder or pellet form, mainly from vinylidene chloride interpolymers and an adequate amount of modifiers such as stabilizers, plasticizers, etc. When using no modifiers with the vinylidene chloride interpolymer, the high frictional and viscous forces on the vinylidene chloride interpolymer results in the vinylidene chloride interpolymer being subject to thermal decomposition, e.g., having carbonaceous material contamination, discoloration, or hydrogen chloride evolvement due to the close proximation of the processing temperature to the vinylidene chloride interpolymer's thermal decomposition point. Moreover, the decomposed interpolymer may generate an undesirable level of carbonaceous material contamination in the extrudate, which could have a deleterious effect upon the gas permeability of the extrudate.

However, in order to industrially extrude and process vinylidene chloride interpolymers without carbonaceous material contamination, discoloration, or hydrogen chloride evolvement in the product, a relatively large amount of a stabilizer and plasticizer would inevitably have to be incorporated in the resin. The larger amount of plasticizer reduces the melt viscosity, thereby reducing the processing temperature which improves thermal stability; and the larger amount of stabilizer improves the thermal stability of the polymeric composition. However, the relatively large amount of a stabilizer and plasticizer increases the permeability of the extrudate to atmospheric gases.

US-A-3862066 discloses that the homogeneity, batch-to-batch uniformity, stability and extrusion rate of vinyl chloride polymers can be improved by adding conventional additives prior to termination of the vinyl chloride polymerization. The vinyl chloride polymer can be an interpolymer of vinyl chloride and a copolymerizable monomer in which the vinyl chloride comprises at least 85 mol percent. Vinylidene chloride is included in an extensive list of suitable copolymerizable monomers but there is no exemplification of vinyl chloride-vinylidene chloride interpolymers. Vinyl chloride-vinylidene chloride interpolymers having at least 85 mol percent vinyl chloride content decompose endothermically, whereas vinyl chloride-vinylidene chloride interpolymers having less than 40 weight percent vinyl chloride decompose exothermically.

Specified additives in US-A-3862066 include lubricants, stabilizers, pigments, and modifiers. The preferred lubricants are mixtures of paraffin wax or calcium stearate with an oxidized polyethylene based on low density (0.90 to 0.95) polyethylene containing up to 5 weight percent oxygen. Exemplified stabilizers include salts of carboxylic or mineral acids and epoxidized oils.

US-A-3891598 discloses that bubble-free high barrier films can be prepared from substantially plasticizer-free vinylidene chloride polymer containing 0.05 to 5 weight percent (based on polymer weight) of magnesium oxide. The polymer is a normally crystalline vinylidene chloride interpolymer containing 70 to 95 weight percent vinylidene chloride and 30 to 5 weight percent of at least one monoethylenically unsaturated copolymerizable monomer. Essentially no additives other than the magnesium oxide are present in the film-forming composition.

US-A-4048428 discloses an extruded film combination comprising a vinylidene chloride crystalline polymer film sandwiched between two plies of thermoplastics polymer, eg polyethylene. The vinylidene chloride polymer can be a copolymer containing at least 50 percent vinylidene chloride. In the exemplified process, the vinylidene chloride polymer is compounded with 7 % dibutyl sebacate and 1% tetrasodium pyrophosphate.

US-A-4248747 discloses single package friable compositions for addition to thermoplastic formulations during extrusion. The compositions are formed by heating to at least 150°C a mixture of a paraffinic hydrocarbon wax with calcium hydroxide and a fatty acid or a calcium salt of a fatty acid; adding additives including a stabilizer to the heated mixture; and cooling to recover a solid, glasslike friable composition. The only specified thermoplastic is polyvinyl chloride and there is no reference to vinylidene chloride homopolymers or copolymers or to vinyl chloride copolymers. Specified additives include external lubricants, including paraffin wax, polyethylene wax and oxidized polyethylene wax; pigments; fillers; and processing aids.

WO-A-8903411 and WO-A-8903412 were published (20th April 1989) after the filing date (4th March 1989) of the present Application but in pursuance of International Patent Applications (both filed 11th October 1988) claiming a priority date (9th October 1987) before the priority date (7th March 1988) claimed for the present Application. The European Patent Applications (EP-A-0388424 and EP-A-0382792) derived from WO-A-8903411 and WO-A-8903412 respectively both designated Belgium, France, Germany, Italy, Netherlands, Sweden, Switzerland/Liechtenstein, and United Kingdom.

WO-A-8903411/EP-A-0388424 and WO-A-8903412/EP-A-0382792 disclose improving the extrudability of a vinylidene chloride interpolymer, having copolymerized therein from 40 to 98 weight percent vinylidene chloride and 60 to 2 weight percent one or more monoethylenically unsaturated monomer copolymerizable with vinylidene chloride, by blending therewith an extrusion aid selected from oxidized polyethylene, oxidized polypropylene, and mixtures thereof; an ethylene-vinyl acetate copolymer; a paraffin wax; an epoxidized oil or resin; and, optionally, an inorganic base.

WO-A-8903858 was published (5th May 1989) after the filing date (4th March 1989) of the present Application but in pursuance of an International Patent Application filed (23rd October 1987) before the priority date (7th March 1988) claimed for the present Application. The European Patent Application (EP-A-0385976) derived from WO-A-8903858 designated Austria, Belgium, France, Germany, Italy, Luxembourg, Netherlands, Sweden, Switzerland/Liechtenstein, and United Kingdom.

WO-A-8903858/EP-A-0385976 discloses improving the extrudability of particles of a vinylidene chloride interpolymer having copolymerized therein from 40 to 98 weight percent vinylidene chloride and 60 to 2 weight percent one or more monoethylenically unsaturated monomer copolymerizable with vinylidene chloride, by blending the particles with 0.01 to 1 part by weight (per 100 parts by weight of vinylidene chloride interpolymer) of at least one extrusion aid having both a hydrophile portion and a lipophile portion and a calculated hydrophile/lipophile balance of less than 2.0. Specified extrusion aids are oxidized polyethylene, oxidized polypropylene; montan ester waxes, having 28-32 carbon atoms per molecule; long chain acids, having 18 or more carbon atoms per molecule, and the salt, ester and amide derivatives thereof; and naturally derived waxes. The preferred extrusion aids are oxidized polyethylene, oxidized polypropylene, or mixtures thereof.

The vinylidene chloride interpolymer composition of WO-A-8903858/EP-A-0385976 can contain conventional additives. These additives include an ethylene-vinyl acetate copolymer (as an additional extrusion aid), tetrasodium pyrophosphate (as an HCl scavenger and stabilizer), and an epoxidized oil or resin (as a plasticizer, stabilizer or lubricant). Exemplified compositions contain oxidized polyethylene (Allied 629A™), an ethylene-vinyl acetate copolymer (EVA 3180™; about 28% vinyl acetate), tetrasodium pyrophosphate, and epoxidized soybean oil (Vikoflex 7177™).

The invention described hereinafter permits the production of a polymeric composition which, if subjected to desirable elevated processing temperatures, generates a reduced level of carbonaceous material contamination, evolves less hydrogen chloride, or has better extrudability, e.g., color, than vinylidene chloride interpolymer alone. Moreover, when the polymeric composition is processed at desirable temperatures the extrudate also possesses a reduced level of carbonaceous material contamination, less discoloration, or less hydrogen chloride evolvement than an extrudate formed from vinylidene chloride interpolymer alone.

In one aspect, the present invention is an extrusion formulation package for thermally sensitive vinylidene chloride interpolymer formed from a monomer mixture comprising 60 to 99 weight percent vinylidene chloride and 40 to 1 weight percent of at least one ethylenically unsaturated comonomer polymerizable therewith, said formulation package comprising from 0.1 to 95 weight percent, based on the total weight of the formulation package, of an alkali metal salt or an alkaline earth metal salt of a weak acid (i.e. a substance capable of being a proton donor which has a measurable dissociation constant); an ethylene homopolymer capable of lowering the frictional coefficient of said vinylidene chloride interpolymer, said polyethylene having a degree of polymerization of at least 715, a melting point in the range 70°C to 175°C and a density in the range 0.85 to 1.1; and at least one of (a) a plasticizer, and (b) at least one external lubricant selected from (i) oxidized polyolefins having a number average molecular weight of less than 5,000 as determined by vapor phase osmometry and (ii) polyolefin waxes or oils.

In a second aspect, the invention is the use to improve the thermal stability of a vinylidene chloride interpolymer formed from a monomer mixture comprising 60 to 99 weight percent vinylidene chloride and 40 to 1 weight percent of at least one ethylenically unsaturated comonomer polymerizable therewith of an extrusion formulation package comprising from 0.1 to 95 weight percent, based on the total weight of the formulation package, of an alkali metal salt or an alkaline earth metal salt of a weak acid (i.e. a substance capable of being a proton donor which has a measurable dissociation constant); an ethylene homopolymer capable of lowering the frictional coefficient of said vinylidene chloride interpolymer, said polyethylene having a degree of polymerization of at least 715, a melting point in the range 70°C to 175°C and a density in the range 0.85 to 1.1; and at least one of (a) a plasticizer, and (b) at least one external lubricant selected from (i) low molecular weight oxidized polyolefins having a number average molecular weight of less than 5,000 as determined by vapor phase osmometry and (ii) polyolefin waxes or oils.

In a third aspect, the invention is a polymeric composition comprising a vinylidene chloride interpolymer formed from a monomer mixture comprising 60 to 99 weight percent vinylidene chloride and 40 to 1 weight percent of at least one ethylenically unsaturated comonomer polymerizable therewith blended with an extrusion formulation package in an amount sufficient to improve the thermal stability of said interpolymer during extrusion, said formulation package comprising from 0.1 to 95 weight percent, based on the total weight of the formulation package, of an alkali metal salt or an alkaline earth metal salt of a weak acid (i.e. a substance capable of being a proton donor which has a measurable dissociation constant); an ethylene homopolymer capable of lowering the frictional coefficient of said vinylidene chloride interpolymer, said polyethylene having a degree of polymerization of at least 715, a melting point in the range 70°C to 175°C and a density in the range 0.85 to 1.1; and at least one of (a) a plasticizer, and (b) at least one external lubricant selected from (i) low molecular weight oxidized polyolefins having a number average molecular weight of less than 5,000 as determined by vapor phase osmometry and (ii) polyolefin waxes or oils.

In a preferred embodiment of the third aspect, the vinylidene chloride interpolymer is present in an amount of from 59.8 to 99.7 weight percent, based on the total weight of the polymeric composition, and the extrusion formulation package is present in an amount of from 40.2 to 0.3 weight percent, based on the total weight of the polymeric composition, and comprises from 0.05 to 5 weight percent, based on the total weight of the polymeric composition, of the metal salt of a weak acid.

In another preferred embodiment of the third aspect, the vinylidene chloride interpolymer is present in an amount of from 93.6 to 98 weight percent, based on the total weight of the polymeric composition, and the extrusion formulation is present in an amount of from 6.4 to 2 weight percent, based on the total weight of the polymeric composition, and comprises from 0.4 to 2 weight percent of the metal salt of a weak acid; from 0.5 to 2 weight percent of the polyethylene; and at least one of (i) from 0.4 to 1.2 weight percent of the plasticizer (a), and (ii) at least one external lubricant selected from 0.2 to 0.3 weight percent of the low molecular weight oxidized polyolefin (b.i), and from 0.5 to 0.9 weight percent of the polyolefin wax or oil (b.ii), all weight percentages being based on the total weight of the polymeric composition.

In a fourth aspect, the invention is a process for making a fabricated article by fabricating a composition of the third aspect into an article using a method selected from casting, blowing, extrusion molding, injection molding, blow molding, coextrusion, laminating, or calendering.

As used in this specification the term "acid" is defined as a substance capable of being a proton donor. A "weak acid" is an acid which as a measurable dissociation in water, and typically has a pH in the range of 2 to 7 for tenth normal solutions. Accordingly, water is itself a weak acid as defined herein. Typically the salts used in this invention have a pH in the range from 4 to 11 for tenth normal solution.

Salts of weak acids include salts of inorganic and organic acids. Salts of inorganic acids include those conventionally defined, in an aqueous medium, as soluble inorganic salts of acids (e.g., tetrasodium pyrophosphate); partially soluble inorganic salts of acids (e.g., magnesium oxide, and magnesium hydroxide); and relatively insoluble inorganic salts of acids, e.g., calcium hydroxy phosphate, commonly referred to as tricalcium phosphate. Persons skilled in the art will recognize that the actual solubility of the salt depends upon a number of variables, e.g., the ratio of salt to water, and pH.

Exemplary salts of organic acids include methyl trisodium pyrophosphate and diisoamyl dipotassium pyrophosphate. Suitable results may also be obtained with organometallic polyphosphates which include the tripolyphosphates, such as t-butyl tetrapotassium tripolyphosphate; and tetrapolyphosphates, such as triethyl tripotassium tetrapolyphosphate.

The most preferred salt of an acid is magnesium hydroxide, such as Kisuma™ 5B which is commercially available from the Kyowa Chemical Co.

Salts of an acid suitable for purposes of the present invention are prepared by processes well-known in the art. By way of illustration only, techniques for preparing magnesium hydroxide, tetrasodium pyrophosphate, and tricalcium phosphate are set forth in The Merck Index, 10th Edition, (1983).

The particulate salts of an acid suitably have an average particle diameter which is less than or equal to the average particle diameter of the vinylidene chloride interpolymer being stabilized. Persons skilled in the art will recognize that the effectiveness of the salts of an acid is generally related to the surface area of the salt employed. For purposes of this invention, the salt of an acid beneficially has an average particle diameter of from to 50 micrometers. One skilled in the art, without undue experimentation, will be able to determine the optimum particle size for specific components.

Polyethylenes (first polyolefins) contemplated by the present invention are selected to lower the "frictional coefficient" of the polymeric composition. "Frictional coefficient" is a measure of the coefficient of friction of the solid polymer upon a solid material other than the polymer. Obviously, the lower the frictional coefficient of a polyethylene, the more it will the lower frictional coefficient of the polymeric composition containing the polyethylene.

One method of measuring friction is by impinging a sample of known cross-section on a rotating roll. The ratio of the tangent force to the radial impinging force is defined as the coefficient of friction (COF). An apparatus called a "screw simulator" is used to allow the measurement of COF at conditions normally found in an extruder feed section. The apparatus and process is described in detail in the following article: C.I. Chung et al., Polym. Eng. Sci., 17(1), 9 (1977).

Viscosity is the resistance to flow. Viscosity is a function of many variables including molecular weights with higher molecular weight polymers having higher viscosities.

The frictional coefficient of the polymeric composition should be at least 20 percent lower than the frictional coefficient of the polymeric composition without the polyethylene, and the viscosity of the polymeric composition should be in the range of 200 percent to 5 percent of the vinylidene chloride interpolymer.

Exemplary polyethylenes include the ultra-low density polyethylenes, low density polyethylenes, linear low density polyethylenes, medium density polyethylenes, and high density polyethylenes.

The polyethylenes have a degree of polymerization of at least 715, a melting point in the range of 70°C to 175°C, and a density in the range of 0.85 to 1.1. To have a degree of polymerization above 715, the polyethylene will have a corresponding average molecular weight of at least 10,000. Such polyethylenes are used because they reduce the frictional coefficient in the solid phase of the interpolymer as it is extruded. High density polyethylene being most preferred, because their relatively low coefficients of friction.

Techniques for preparing the polyethylenes are well-known in the art. The Kirk-Othmer Encyclopedia of Chemical Technology, Volume 16, 3rd edition, (1980) sets forth general preparation methods.

By "plasticizer" is meant that class of components commonly referred to as plasticizers; although not intended to be bound by theory, plasticizers are generally liquid additives which are compatible with the vinylidene chloride interpolymer and decrease the glass transition temperature of the interpolymer.

Exemplary plasticizers include epoxidized materials such as epoxidized soybean oil and epoxidized linseed oil; and non-epoxidized materials such as the sebacates such as dibutyl sebacate and di-2-ethylhexyl sebacate. The non-epoxidized materials are preferred because of reduced carbonaceous material in the extrudate.

By "extrudate" is meant any composition which becomes partially or totally melted when subjected to elevated temperatures during processing methods, e.g., casting, blowing, extrusion, molding, injection molding, blow molding, coextrusion, laminating, or calendering.

Techniques for preparing the epoxidized oils are well known in the art. The Kirk-Othmer Encyclopedia of Chemical Technology, Volume 9, 3rd edition, (1980) sets forth general preparation methods. Techniques for preparing diesters are well known in the art; Morrison and Boyd, 3rd edition, (1973) sets forth typical ester formation reactions.

Extrusion aids include internal and external lubricants which improve extrusion performance of the vinylidene chloride interpolymer. By "external lubricant" is meant any of the class of compounds that have heretofore been suggested or employed as external lubricants in compositions containing halogen-containing polymers. The compositions may perform functions in addition to that mechanism referred to as external lubrication. Although not intended to be bound by theory, the lubricants are classified as "external" because they are believed to be at least partially incompatible with the molten polymer. The lubricant will therefore migrate to the surface of the molten polymer and form a film between the polymer and the heated metal surface of the extruder, mill or other equipment used to process the polymer composition. This film significantly reduces the tendency of the polymer to adhere to these metal surfaces and degrade. Likewise it is believed that the external lubricant reduces the frictional forces between liquid polymer and solid polymer.

The low molecular weight oxidized polyolefins (second polyolefins) utilized as external lubricants in the present invention are low molecular weight polymers which have a number average molecular weight of less than 5,000, as determined by vapor phase osmometry. Preferably the number average molecular weight is 1,000 to 4,000, and most preferably between 1,500 and 2,500. The polyolefins have preferably been oxidized to an acid number of 10 to 35, more preferably 13 to 17. These oxidized polyolefins preferably have a softening point, as determined by ASTM E-28 of 85°C to 145°C, more preferably 95 to 140, and most preferably 98 to 115. Generally, such oxidized polyolefins have a Brookfield viscosity at 140°C of 120 to 300 centipoise (cps ; mPa.s), and preferably 170 to 250 cps (mPa.s).

Exemplary oxidized polyolefins including oxidized polyethylene, oxidized polypropylene, or mixtures thereof are employed. Oxidized polyethylene and oxidized polypropylene are well-known. Oxidized polyethylene is preferred.

Oxidized polyethylene and oxidized polypropylene contain free or esterified carboxylic acid residues and can be prepared by reacting an ethylene homopolymer or copolymer with oxygen or an organic peroxide or hydroperoxide. Techniques for preparing the oxidized polyolefins are well known in the art; the Encyclopedia of Polymer Science and Technology, Volume 6, (1967).

By "polyolefin waxes and oils" are meant hydrocarbons, or mixtures of hydrocarbons, generally having the general formula CₙH₂ₙ₊₂. Exemplary polyolefin waxes and oils include paraffin waxes, nonoxidized polyethylene waxes, and liquid and solid hydrocarbons such as paraffin oil. Paraffin and polyethylene waxes are preferred.

Paraffin waxes are defined herein as having a Brookfield viscosity in the range of 50 to 300 cps (mPa.s) @ 140°C; a melting point in the range of 40°C to 80°C; and a density in the range of 0.85 to 0.95. Exemplary paraffin waxes include waxes commercially available from Hoechst AG, such as Hoechst™ XL-165FR, Hoechst™ XL-165SB, and Hoechst™ XL-165.

Polyethylene waxes are defined herein as having a Brookfield viscosity in the range of 130 to 450 cps (mPa.s) @ 140°C; a melting point in the range of 80°C to 100°C; and a density in the range of 0.85 to 0.95. Exemplary polyethylene waxes include waxes commercially available from Allied Chemical Co. such as Allied™ 617A and 6A.

Techniques for preparing the polyolefin waxes and oils are well known in the art. The Kirk-Othmer Encyclopedia of Chemical Technology, Volume 24, 3rd edition, (1980) sets forth general preparation methods for the polyolefin waxes and oils.

Preferably, the oxidized polyolefins and polyolefin waxes are used in combination because they exhibit synergism in reducing carbonaceous material contamination in the polymeric composition after being exposed to desirable processing temperatures.

In another embodiment, the present invention is a polymeric composition comprising a vinylidene chloride interpolymer blended with the extrusion formulation package to form a polymeric or plastic composition having improved extrudability. By "polymeric or plastic composition" is meant the combination of the interpolymer and extrusion formulation package as well as other additives. For the purposes of this invention, improved extrudability means that, if subjected to desirable elevated processing temperatures, the vinylidene chloride interpolymer and extrusion formulation package generate a reduced level of carbonaceous material contamination, evolve less hydrogen chloride, or have good extrudability, e.g., color. Moreover, when the polymeric composition is processed at desirable temperatures, in either powder or pellet form, the extrudate also possesses a reduced level of carbonaceous material contamination, reduced discoloration, or less hydrogen chloride evolvement.

The extrusion formulation package is present in the polymeric polyblend composition in amounts ranging from a minimum weight percent of 0.3, preferably 0.9, and most preferably 2.0; and a maximum weight percent of 40.2, preferably 21.9, and most preferably 6.4; said weight percents being based on the total weight of the polymeric polyblend composition.

The vinylidene chloride interpolymer is present in the polymeric composition in amounts ranging from a a maximum weight percent of 99.7, preferably 99.1, and most preferably 98; and a minimum weight percent of 59.8, preferably 78.1, and most preferably 93.6; said weight percents being based on total weight of the polymeric composition.

Vinylidene chloride interpolymers suitable for use in the present invention are those vinylidene chloride interpolymers formed from a monomer mixture of vinylidene chloride monomer and an amount of one or more ethylenically unsaturated comonomers copolymerizable with vinylidene chloride monomer.

In preparing the monomer phase, such phase comprises a mixture containing essentially all of the monomer to be polymerized. An effective amount of polymerized vinylidene chloride monomer is in the range of from 60 to 99 weight percent, said weight percents being based upon the total weight of the interpolymer. The monomer mixture comprises the ethylenically unsaturated comonomer or comonomers copolymerizable with the vinylidene chloride monomer in an amount of from 40 to 1 weight percent, based on total weight of the vinylidene chloride interpolymer. The preferred ranges, as is known to the skilled artisan, are dependent upon the ethylenically unsaturated comonomer copolymerized therewith.

The amount of ethylenically unsaturated comonomer is maintained below an amount sufficient to destroy the semicrystalline character of the interpolymer. By "semicrystalline character" it is meant that the interpolymer has between 5 percent and 95 percent crystallinity. Crystallinity values depend upon the measuring technique, and as used herein crystallinity is defined by the commonly used density method. See, for example, the discussion by R. Wessling, in Chapter 6 of Polyvinylidene Chloride, Vol 5, Gordon and Breach Science Publishers, New York, 1977.

Suitable ethylenically unsaturated comonomers copolymerizable with the vinylidene chloride monomer include vinyl chloride, alkyl acrylates, alkyl methacrylates, acrylic acid, methacrylic acid, itaconic acid, acrylonitrile and methacrylonitrile. The alkyl acrylates and alkyl methacrylates are generally selected to have from 1 to 8 carbon atoms per alkyl group. Preferably, alkyl acrylates and alkyl methacrylates are selected to have from 1 to 4 carbon atoms per alkyl group. The alkyl acrylates and alkyl methacrylates are most preferably selected from the group consisting of methyl acrylate, ethyl acrylate, and methylmethacrylate.

When the ethylenically unsaturated comonomer employed is a vinyl chloride, the vinyl chloride will preferably be present in an amount of from 30 to 5 percent by weight of interpolymer and the amount of vinylidene chloride is from 70 to 95 percent by weight of interpolymer, and most preferably the vinyl chloride will be present in an amount of from 25 to 10 percent by weight of interpolymer and the amount of vinylidene chloride is from 75 to 90 percent by weight of interpolymer.

When the ethylenically unsaturated comonomer employed is an alkyl acrylate, the alkyl acrylate will preferably be present in an amount of from 15 to 2 percent by weight of interpolymer; and the amount of vinylidene chloride is from 85 to 98 percent by weight of interpolymer; and most preferably the alkyl acrylate will be present in an amount of from 10 to 3 percent by weight of interpolymer; and the amount of vinylidene chloride is from 90 to 97 percent by weight of interpolymer.

Methods of forming the vinylidene chloride interpolymers suitable for use in the present invention are well-known in the prior art. The vinylidene chloride interpolymer is generally formed through an emulsion or suspension polymerization process. Exemplary of such processes are US-A-2,558,728; US-A-3,007,903; US-A-3,642,743; and US-A-3,879,359; and the methods described by R. A. Wessling, in Polyvinylidene Chloride, Gordon and Breach Science Publishers, New York, 1977, Chapter 3. Typically, the monomeric materials are emulsified or suspended in an aqueous phase. The aqueous phase contains a polymerization initiator and a surface active agent capable of emulsifying or suspending the monomeric materials in the aqueous phase. The polymerization of the monomeric materials is usually carried out with heating and agitation.

After polymerization is complete, the resulting suspension or emulsion slurry of vinylidene chloride interpolymer has a majority of an aqueous phase. The resultant slurry is vacuum stripped. Thereafter, the slurry is cooled down, unloaded and dewatered, and the resin is collected and further dried.

The components of the extrusion formulation package may be separately added and blended with the vinylidene chloride interpolymer; or may be blended concurrently with the vinylidene chloride interpolymer, such as by physically blending the vinylidene chloride interpolymer with an extrusion formulation package which has been separately prepared. When formulating the polymeric composition, the components of the extrusion formulation package will generally be blended with the interpolymer in various amounts, said amounts being based upon the weight percent of the total weight of the polymeric composition.

The salt of the weak acid may be added in an amount effective to provide an improved color stability of the polymeric composition. Although not intended to be bound by theory, it is believed that the salts of weak acids act as HCL scavengers to provide an effective reduction in the amount of free HCl in the polymeric composition. Generally the salt of the weak acid will be added in an amount of from 0.05 to 5 weight percent, preferably in an amount of from 0.1 to 3 weight percent; and most preferably in an amount of from 0.4 to 2 weight percent, said weight percents based upon the weight of the polymeric composition.

The polyethylene is suitably blended with the vinylidene chloride interpolymer in an amount of from 0.1 to 40 weight percent, preferably in an amount of from 0.3 to 15 weight percent; more preferably in an amount of from 0.4 to 5 weight percent; and most preferably 0.5 to 2 weight percent, said weight percents being based on the total weight of the polymeric composition.

The plasticizer is incorporated into the vinylidene chloride interpolymer in an amount of up to 3 weight percent, preferably from 0.1 to 2 weight percent, and most preferably from 0.4 to 1.2 weight percent.

The oxidized polyolefins are selectively incorporated into the vinylidene chloride interpolymer to form a polymeric composition in the range of from 0.05 to 1 weight percent, preferably in the range of from 0.1 to 0.4 weight percent, most preferably in the range of from 0.2 to 0.3 weight percent, said weight percents being based upon the total weight of the polymeric composition.

The polyolefins waxes and oils are selectively incorporated into the vinylidene chloride interpolymer to form a polymeric composition in the range of from 0.1 to 2 weight percent, preferably in the range of from 0.3 to 1.5 weight percent, most preferably in the range of from 0.5 to 0.9 weight percent, said weight percents being based upon the total weight of the polymeric composition.

The polymeric composition may contain additional additives well-known to those skilled in the art. Exemplary of additives which may be incorporated in the formulation are light stabilizers such as hindered phenol derivatives; pigments such as titanium dioxide. Each of these additives is known and several types of each are commercially available.

Applicants have discovered that the extrusion formulation package of the present invention improves the extrudability of the vinylidene chloride interpolymer. If subjected to desirable elevated processing temperatures, the vinylidene chloride interpolymer and extrusion formulation package generate a reduced level of carbonaceous material contamination, evolve less hydrogen chloride, or have good color. Moreover, when the polymeric composition is processed at desirable temperatures the extrudate also possesses a reduced level of carbonaceous material contamination, reduced discoloration, or less hydrogen chloride evolvement.

Blending of the vinylidene chloride interpolymer and the formulation package can be accomplished by using conventional melt blending, as well as dry blending techniques. Such blending into a polymeric composition should occur prior to exposure of the polymeric composition to any significant amount of heat processing. Thus, when the polymeric composition is to be extruded in pellet form, it is most preferred to blend the vinylidene chloride interpolymer and extrusion formulation package prior to pellet formation.

In using conventional processing equipment for thermally sensitive polymers, three conditions should be met. Two conditions, which are interrelated, are processing time and processing temperature. In melt processing polymers, it is generally recognized that as processing temperatures increase, processing times must decrease in order to avoid undesirable results such as polymer degradation. Melt processing must be accomplished at a temperature below that at which decomposition of the vinylidene chloride interpolymer becomes significant. A third condition is that sufficient mixing must be generated during melt processing to provide a visually homogeneous blend, i.e., no visible solids, within a reasonable mixing time.

Exemplary melt processing equipment includes heated two roll compounding mills, Brabender mixers, Banbury mixers, single screw extruders, and twin screw extruders, which are constructed for use with thermally sensitive polymers. See, for example, the discussion by R. Wessling, in Chapter 11 of Polyvinylidene Chloride, Vol 5, Gordon and Breach Science Publishers, New York, 1977. Desirable results are obtained when an extruder, either single screw or twin screw, is used for melt processing the components of the polymeric composition.

When dry blending, the components should form a visually uniform admixture. Suitable dry blending equipment includes Hobart mixers, Welex mixers, and Henschel High Intensity mixers.

In a preferred embodiment of the present invention, the polymeric composition may be pelletized. Methods of forming the polymeric composition into pellets are well-known to those skilled in the art. Any method capable of forming the polymeric composition into pellets is suitable for use in the present invention. For the purposes of this application, the terms "pellet" or "pellets" refer to particles having a minimum cross-sectional dimension of at least 1/32 inch (0.8 mm) preferably of at least 1/16 inch (1.6 mm), and most preferably of at least 1/8 inch (3.2 mm); said pellets suitably have a maximum cross-sectional dimension of at least 1/2 inch (12.5 mm), beneficially of at least 3/8 inch (9.5 mm), and preferably of at least 1/4 inch (6.5 mm). An exemplary method of forming the polymeric composition into pellets includes extruding the polymeric composition through a strand die to form an extruded strand, and chopping the extruded strand into pellets.

The polymeric composition, in either powder or pellet form, may be fabricated into any suitable final product, e.g., a variety of films or other articles.
As is well known in the art, the films and articles are fabricated with conventional coextrusion; e.g, feedblock coextrusion, multimanifold die coextrusion, or combinations of the two; injection molding; extrusion molding; casting; blowing; blow molding; calendering; and lamination techniques.

Articles formed therefrom include blown and cast, mono and multilayer, films; rigid and flexible containers; rigid and foam sheet; tubes; pipes; rods; fibers; and various profiles. Lamination techniques are particularly suited to produce multiply sheets. As is known in the art, specific laminating techniques include fusion; i.e., whereby self-sustaining lamina are bonded together by applications of heat and pressure; wet combining, i.e., whereby two or more plies are laminated using a tie coat adhesive, which is applied wet, the liquid driven off, and combining by subsequent pressure laminating in one continuous process; or by heat reactivation, i.e., combining a precoated film with another film by heating, and reactivating the precoat adhesive so that it becomes receptive to bonding after subsequent pressure laminating.

Exemplary articles include rigid containers used for the preservation of food, drink, medicine and other perishables. Such containers should have good mechanical properties, as well as low gas permeabilities to, for example, oxygen, carbon dioxide, water vapor, odor bodies or flavor bodies, hydrocarbons or agricultural chemicals. Most organic polymers such as the polyolefins and styrene polymers, by themselves do not possess sufficient resistance to transmission of atmospheric gases and vapors.
Consequently, multilayer sheet structures employed in packaging materials have organic polymer skin layers laminated on each side of a vinylidene chloride interpolymer barrier layer, generally with glue layers used to promote adhesion between the barrier layer and dissimilar material layers.

The present invention is illustrated in further detail by the following examples. The examples are for the purposes of illustration only, and are not to be construed as limiting the scope of the present invention. All parts and percentages are by weight unless otherwise specifically noted.

### Examples

### Examples 1-12

Various polymeric compositions are produced comprising various quantities of the components set forth in Table I.

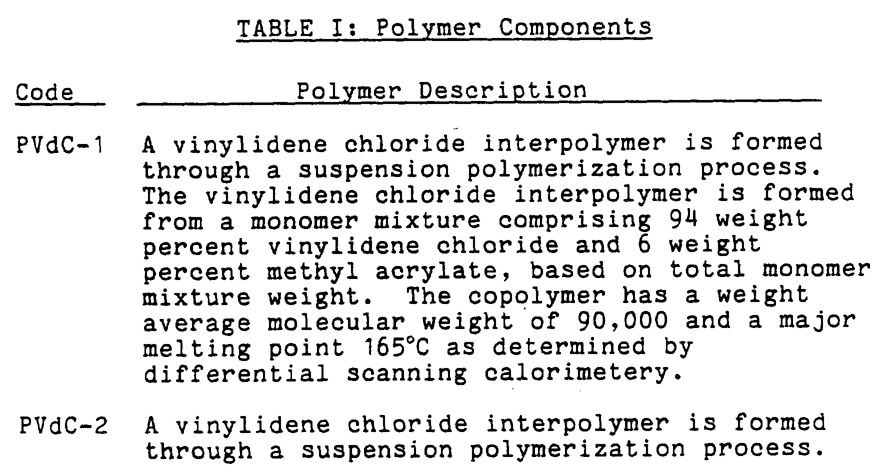

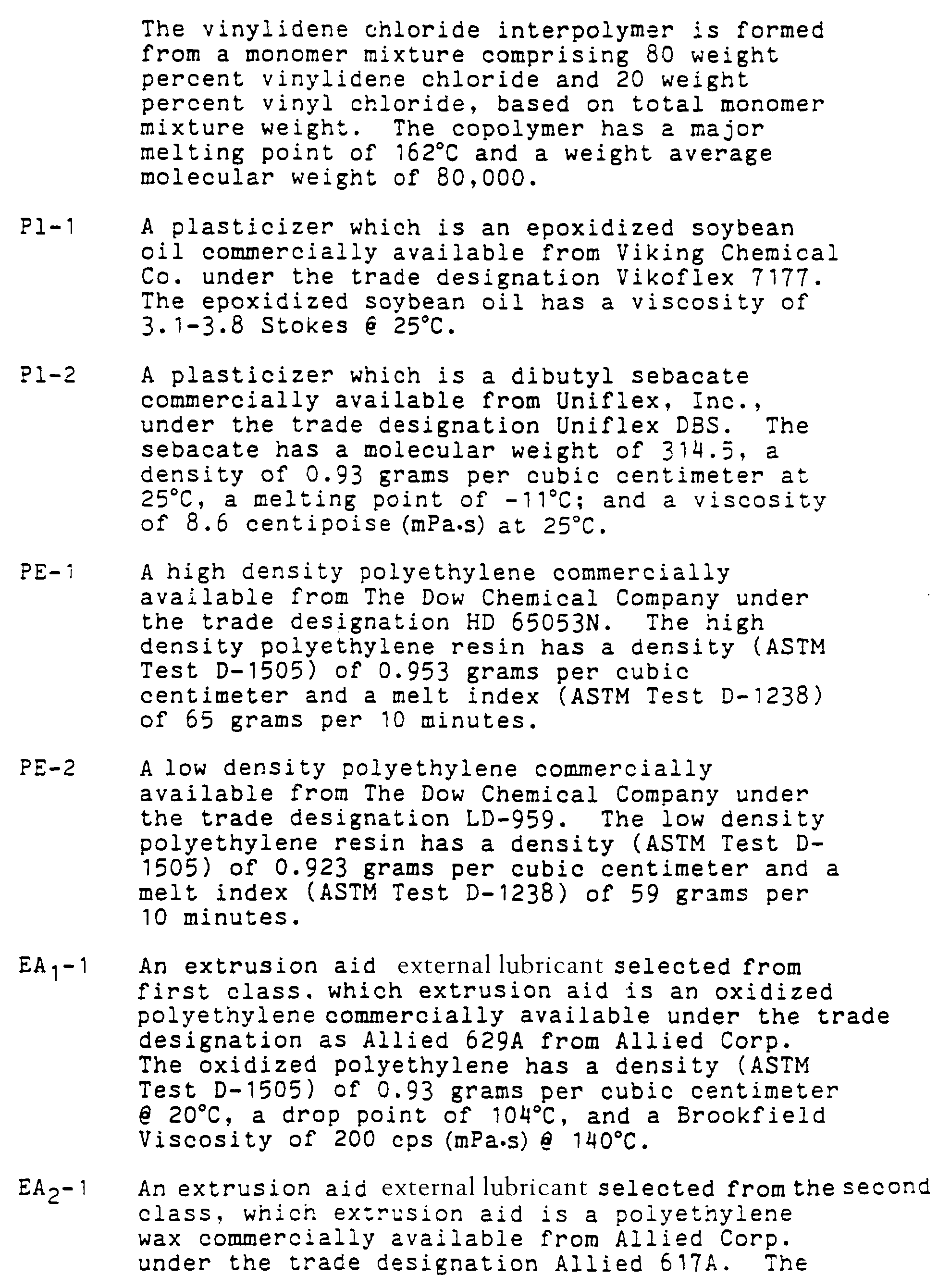

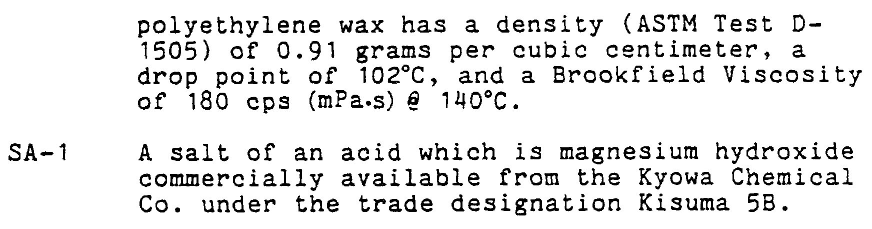

### Sample Preparation

Polymeric compositions are formed by blending various quantities of the components from Table I.

The polymeric compositions are formed into a generally homogeneous mixture by dry blending the components. The components are loaded in 20 lb (9 kg) batches into a Hobart mixer, and mixed for a period of approximately one hour.

The powdery mixtures are extruded through a Leistritz Model No. LSM-30.34, 34 mm twin screw compounding extruder. The extruder has the following set temperatures: (a) Zone 1 temperature = 175°C; (b) Zone 2 temperature = 175°C; (c) Zone 3 temperature = 175°C; (d) Zone 4 temperature = 175°C; (e) Zone 5 temperature = 175°C; and (f) die temperature = 175°C. From the extruder, the blends are passed to a strand die and extruded into a water bath. The strand is then chopped into pellets. However, it is known to one skilled in that art that the powdery mixtures could be fabricated into a variety of articles via similar extrusion processing.

### Color Testing of Pellets

The pellets are visually inspected to determine their color. The samples to be analyzed are examined by a group of 7 trained individuals each of whom independently evaluates color of the extrudate tapes. Color is qualitatively rated on a scale of 1 to 10 over a continuous range of discoloration, wherein 1 represents a creamy white color and 10 a rather dark brown. A composite profile is compiled.

The results are set forth in Table II.

### Extrudate Tape Color

The pellets are loaded into a 2 1/2" (6.5 cm) extruder having a length to diameter ratio of 21/1 and extruded in a continuous process for a period of 20 minutes. The extruder has the following set temperatures: (a) first zone temperature = 174°C; (b) second zone temperature= 168°C; (b) third zone temperature = 163°C; and (c) die temperature= 165°C.

As the polymeric composition decomposes, it discolors, i.e., becomes brownish. The extrudate tapes are visually inspected to determine their color. Color is qualitatively rated on a scale of 1 to 5 over a continuous range of discoloration, wherein 1 represents a creamy color and 5 a rather dark brown.

The results are set forth in Table II.

### Carbonaceous Material Contamination Testing

The pellets are loaded into a 2 1/2" (6.5 cm) extruder having a length to diameter ratio of 21:1 and extruded in a continuous process for a period of 20 minutes. The extruder has the following set temperatures: (a) first zone temperature = 174°C; (b) second zone temperature = 168°C; (b) third zone temperature = 163°C; and (c) die temperature = 175°C.

After extruding the pellets, the decomposition of the pellets into carbonaceous material is determined by visually inspecting the root of the extruder screw heel and the extrudate tape. When evaluating the root of the extruder screw heel, pellets are extruded in a continuous process for a period of 4 hours. The extent of carbonaceous material formation is qualitatively rated on a scale of 1 to 5 over a continuous range of carbonaceous material buildup, wherein 1 represents generally no visible carbonaceous material on the surface and 5 represents a layer of carbonaceous material generally completely covering the surface.

Carbonaceous material contamination in the extrudate tape is determined by counting specks of carbonaceous material over a one minute period every 30 minutes during the 4 hour extrusion trial. The extent of carbonaceous material contamination is rated on a scale of 1 to 5 over a continuous range of carbonaceous material buildup, wherein 1 represents less than 20 carbonaceous material speck counts per minute and 5 represents greater than 100 carbonaceous material speck counts per minute.

### Melt Adhesion Testing

### Sample Preparation

Polymeric compositions are formed by blending various quantities of the components from Table I.

The polymeric compositions are formed into a generally homogeneous mixture by dry blending the components. The components are loaded in 10 lb (4.5 kg) batches into a Hobart mixer, and mixed for a period of approximately one hour.

The melt adhesion test comprises the use of a two-roll mill test consisting of two steam heated rolls approximately three inches in diameter and six inches in length that rotate in opposite directions. There is an adjustable gap between the two rolls which are rotating at different speeds. The rolls moving at different speeds cause a shearing effect on the material being tested.

The general sample testing procedure for vinylidene chloride interpolymer is the following:
1) Steam pressure is adjusted to achieve the desired roll temperature, generally 340° to 350°F (170° to 177°C).
2) A two hundred gram sample is weighed.
3) The rolls are started and closed to provide a gap of zero.
4) Begin monitoring the time as the sample is poured on the rolls.
5) Slowly open the gap between the rolls as the material melts and adheres to the rolls.
6) When the material is fully melted, i.e., no visible solids are present, record the time elapsed since the start of step 4).
7) Adjust the gap between the rolls so that a small roll of material one-half inch (1.25 cm) in diameter is between them.

The roll adhesion is the relative adhesion of the main mass of the material to the roll surface and is determined by how easily the material can be scraped from the roll.

Data regarding the adhesion of the compositions to the roll is generated by the test. The adhesion rating is characterized by a rating on a scale of 0 to 5.
0 - The main mass will lift from the roll without leaving any material in a sheet.
1. The polymer will lift from the roll but will leave a spotty thin coating.
2 - The polymer will not lift from the roll in a sheet. It is necessary to scrape the material off the roll, but it is possible to get the roll fairly clean.
3 - The material will not lift from the roll at all. A path will be scraped. A thin soft layer will remain at the boundary between the roll and melt.
4. The material must be scraped to the end of the roll. A fairly heavy layer will remain on the roll and melt.
5 - It is very hard to scrape through to the roll. There is a hard layer of material at the boundary between roll and melt.

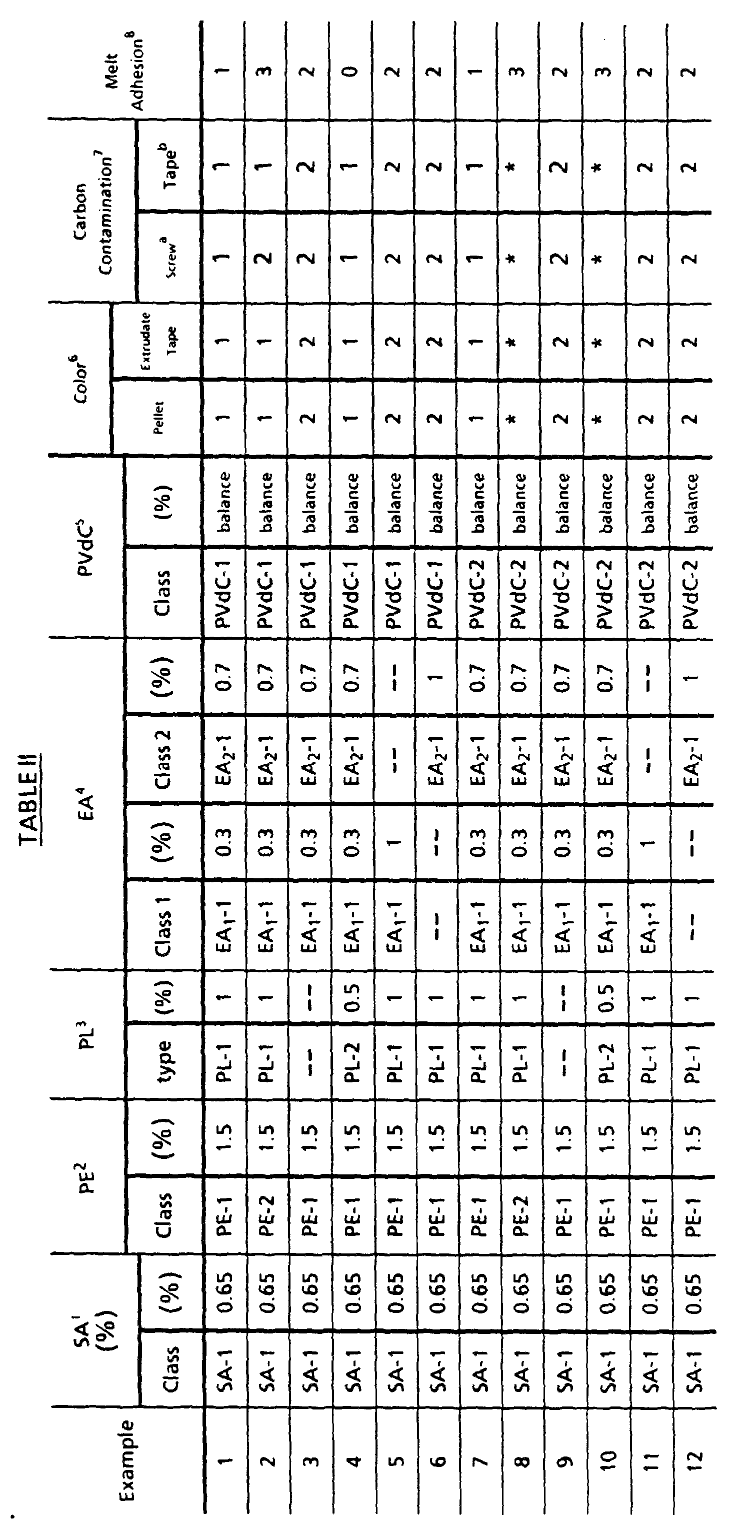

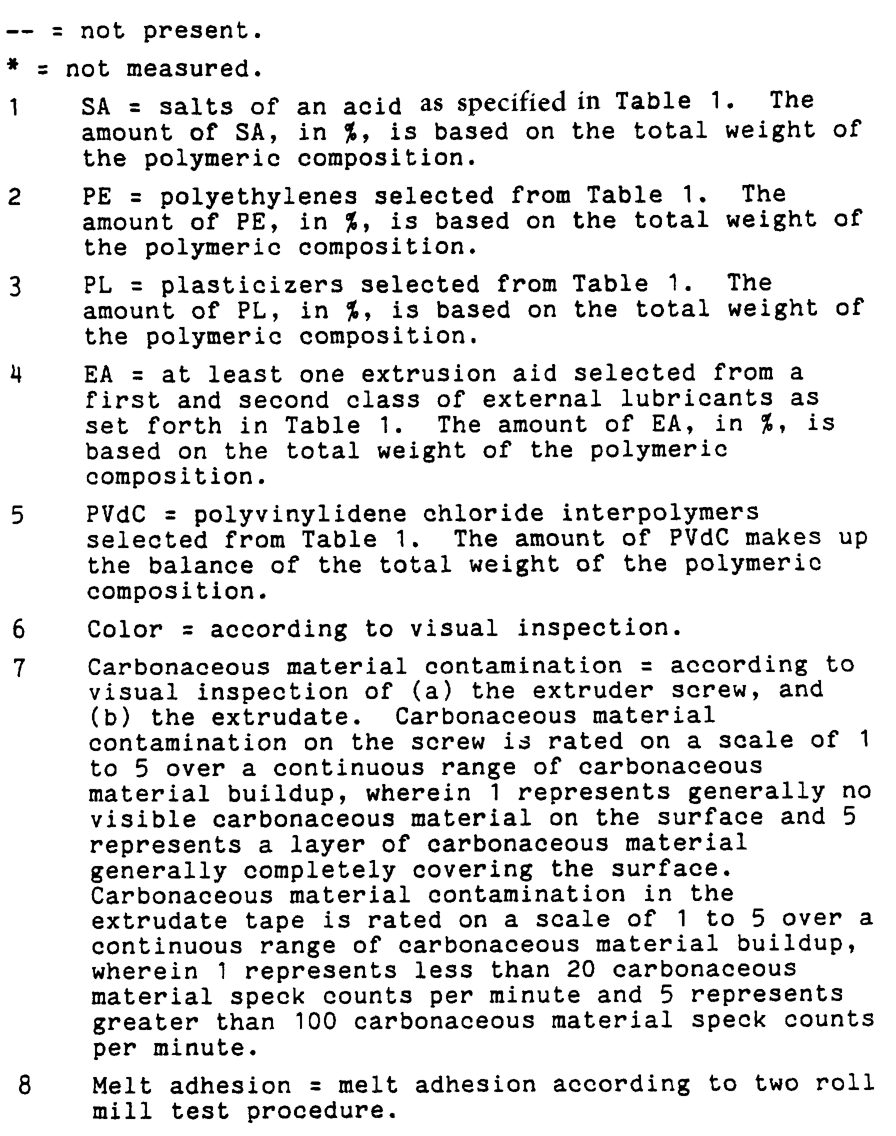

As can be seen from the above table, the compositions of the present invention possess good color characteristics, and low carbonaceous material contamination.

### Examples 13 and 14

Examples 1 and 4, respectively, are repeated with the following exception: 1 weight percent of the Allied™ 629A oxidized polyethylene is substituted for the 0.3 weight percent of Allied™ 629A oxidized polyethylene.

The extrudate tape exhibited good color characteristics, and low carbonaceous material contamination.

### Examples 15-16

Examples 1 and 4, respectively, are repeated with the following exception: 0.1 weight percent of Allied™ 617A polyethylene wax is substituted for the 0.7 weight percent Allied™ 617A polyethylene wax.

The extrudate tape exhibited good color characteristics, and low carbonaceous material contamination.

### Examples 17-18

Examples 1 and 4 are repeated with the following exception: 0.3 weight percent Kisuma™ 5B is substituted for the 0.65 weight percent Kisuma™ 5B.

The extrudate tape exhibited good color characteristics, and low carbonaceous material contamination.

### Examples 19-20

Examples 1 and 4 are repeated with the following exception: 2 weight percent Kisuma™ 5B is substituted for the 0.65 weight percent Kisuma™ 5B.

The extrudate tape exhibited good color characteristics, and low carbonaceous material contamination.

### Examples 21-22

Examples 7 and 10, respectively, are repeated with the following exception: 1 weight percent of the Allied™ 629A oxidized polyethylene is substituted for the 0.3 weight percent of Allied™ 629A oxidized polyethylene.

The extrudate tape exhibited good color characteristics, and low carbonaceous material contamination.

### Examples 23-24

Examples 7 and 10, respectively, are repeated with the following exception: 0.1 weight percent of Allied™ 617A polyethylene wax is substituted for the 0.7 weight percent Allied™ 617A polyethylene wax.

The extrudate tape exhibited good color characteristics, and low carbonaceous material contamination.

### Examples 25-26

Examples 7 and 10 are repeated with the following exception: 0.3 weight percent Kisuma™ 5B is substituted for the 0.65 weight percent Kisuma™ 5B.

The extrudate tape exhibited good color characteristics, and low carbonaceous material contamination.

### Examples 27-28

Examples 7 and 10 are repeated with the following exception: 2 weight percent Kisuma™ 5B is substituted for the 0.65 weight percent Kisuma™ 5B.

The extrudate tape exhibited good color characteristics, and low carbonaceous material contamination.

Although the invention has been described in considerable detail with reference to certain preferred embodiments thereof, it will be understood that variations and modifications can be effected within the scope of the invention as described above and as defined in the appended claims.

## Claims

1. An extrusion formulation package for thermally sensitive vinylidene chloride interpolymer formed from a monomer mixture comprising 60 to 99 weight percent vinylidene chloride and 40 to 1 weight percent of at least one ethylenically unsaturated comonomer polymerizable therewith, said formulation package comprising from 0.1 to 95 weight percent, based on the total weight of the formulation package, of an alkali metal salt or an alkaline earth metal salt of a weak acid (i.e. a substance capable of being a proton donor which has a measurable dissociation constant); an ethylene homopolymer capable of lowering the frictional coefficient of said vinylidene chloride interpolymer, said polyethylene having a degree of polymerization of at least 715, a melting point in the range 70°C to 175°C and a density in the range 0.85 to 1.1; and at least one of (a) a plasticizer, and (b) at least one external lubricant selected from (i) low molecular weight oxidized polyolefins having a number average molecular weight of less than 5,000 as determined by vapor phase osmometry and (ii) polyolefin waxes or oils.

2. A formulation as claimed in Claim 1, wherein the metal salt of a weak acid is magnesium hydroxide.

3. A formulation as claimed in Claim 1 or Claim 2, wherein the metal salt of a weak acid is present in an amount of from 8.3 to 55.6 weight percent, based on the total weight of the formulation package.

4. A formulation as claimed in any one of the preceding claims wherein said polyethylene is present in an amount of from 0.9 to 99.5 weight percent, based on the total weight of the formulation package.

5. A formulation as claimed in Claim 4, wherein said polyethylene is present in an amount of from 10.2 to 57.1 weight percent, based on the total weight of the formulation package.

6. A formulation as claimed in any one of the preceding claims, wherein said polyethylene is high density polyethylene.

7. A formulation as claimed in any one of the preceding claims, wherein the plasticizer (a) is present in an amount of up to 90.9 weight percent, based on the total weight of the formulation package.

8. A formulation as claimed in Claim 7, wherein the plasticizer (a) is present in an amount of from 7.1 to 42.9 weight percent, based on the total weight of the mixture.

9. A formulation as claimed in any one of the preceding claims, wherein the plasticizer (a) is selected from epoxidized oils and the sebacates.

10. A formulation as claimed in any one of the preceding claims, wherein the oxidized polyolefin (b.i) has a number average molecular weight of 1,000 to 4,000, an acid number of 10 to 35, and a softening point of 85°C to 145°C.

11. A formulation as claimed in any one of the preceding claims, wherein the oxidized polyolefin (b.i) is present in an amount of from 0.1 to 80 weight percent.

12. A formulation as claimed in Claim 11, wherein the oxidized polyolefin (b.i) is present in an amount of from 3.2 to 14.3 weight percent.

13. A formulation as claimed in any one of the preceding claims, wherein the oxidized polyolefin (b.i) is oxidized polyethylene.

14. A formulation as claimed in any one of the preceding claims, wherein the polyolefin wax or oil (b.ii) is present in an amount of from 0.2 to 90.9 weight percent, based on the total weight of the mixture.

15. A formulation as claimed in Claim 14, wherein the polyolefin wax or oil (b.ii) is present in an amount of from 8.3 to 37.5 weight percent, based on the total weight of the mixture.

16. A formulation as claimed in any one of the preceding claims, wherein the polyolefin wax or oil (b.ii) is selected from polyethylene wax and paraffin wax.

17. A formulation as claimed in any one of the preceding claims, wherein both an oxidized polyolefin (b.i) and a polyolefin wax (b.ii) are present.

18. The use to improve the thermal stability of a vinylidene chloride interpolymer formed from a monomer mixture comprising 60 to 99 weight percent vinylidene chloride and 40 to 1 weight percent of at least one ethylenically unsaturated comonomer polymerizable therewith of an extrusion formulation package comprising from 0.1 to 95 weight percent, based on the total weight of the formulation package, of an alkali metal salt or an alkaline earth metal salt of a weak acid (i.e. a substance capable of being a proton donor which has a measurable dissociation constant); an ethylene homopolymer capable of lowering the frictional coefficient of said vinylidene chloride interpolymer, said polyethylene having a degree of polymerization of at least 715, a melting point in the range 70°C to 175°C and a density in the range 0.85 to 1.1; and at least one of (a) a plasticizer, and (b) at least one external lubricant selected from (i) low molecular weight oxidized polyolefins having a number average molecular weight of less than 5,000 as determined by vapor phase osmometry and (ii) polyolefin waxes or oils.

19. A use as claimed in Claim 18, wherein the extrusion formulation package is as defined in any one of Claims 2 to 17.

20. A polymeric composition comprising a vinylidene chloride interpolymer formed from a monomer mixture comprising 60 to 99 weight percent vinylidene chloride and 40 to 1 weight percent of at least one ethylenically unsaturated comonomer polymerizable therewith blended with an extrusion formulation package in an amount of 0.3 to 40.2 weight percent (based on the total weight of the blended polymeric composition) to improve the thermal stability of said interpolymer during extrusion, said formulation package comprising from 0.1 to 95 weight percent, based on the total weight of the formulation package, of an alkali metal salt or an alkaline earth metal salt of a weak acid (i.e. a substance capable of being a proton donor which has a measurable dissociation constant); an ethylene homopolymer capable of lowering the frictional coefficient of said vinylidene chloride interpolymer, said polyethylene having a degree of polymerization of at least 715, a melting point in the range 70°C to 175°C and a density in the range 0.85 to 1.1; and at least one of (a) a plasticizer, and (b) at least one external lubricant selected from (i) low molecular weight oxidized polyolefins having a number average molecular weight of less than 5,000 as determined by vapor phase osmometry and (ii) polyolefin waxes or oils.

21. A polymeric composition as claimed in Claim 20 comprising
(A) from 59.8 to 99.7 weight percent, based on the total weight of the polymeric composition, of said vinylidene chloride interpolymer blended with
(B) from 40.2 to 0.3 weight percent, based on the total weight of the polymeric composition, of said extrusion formulation package comprising from 0.05 to 5 weight percent, based on the total weight of the polymeric composition, of the metal salt of a weak acid.

22. A polymeric composition as claimed in Claim 20 or Claim 21, wherein the vinylidene chloride interpolymer is present in an amount of from 78.1 to 99.1 weight percent and the extrusion formulation package is present in an amount of from 21.9 to 0.9 weight percent, said weight percents being based on the total weight of the polymeric composition.

23. A polymeric composition as claimed in Claim 22, wherein the vinylidene chloride interpolymer is present in an amount of from 93.6 to 98 weight percent and the extrusion formulation package is present in an amount of from 6.4 to 2 weight percent, said weight percents being based on the total weight of the polymeric composition.

24. A polymeric composition as claimed in any one of Claims 20 to 23, wherein the ethylenically unsaturated comonomer copolymerizable with the vinylidene chloride is an alkyl acrylate or methacrylate having from 1 to 8 carbon atoms per alkyl group.

25. A polymeric composition as claimed in any one of Claims 20 to 23, wherein the monomer copolymerizable with the vinylidene chloride is vinyl chloride.

26. A polymeric composition as claimed in any one of Claims 20 to 25, wherein said polyethylene is present in an amount of from 0.1 to 40 weight percent, based on the total weight of the polymeric composition.

27. A polymeric composition as claimed in any one of Claims 20 to 26, wherein the plasticizer (a) is present in an amount of up to 3 weight percent, based on the total weight of the polymeric composition.

28. A polymeric composition as claimed in any one of Claims 20 to 27, wherein the oxidized polyolefin (b.i) is present in an amount of from 0.05 to 1 weight percent, based on the total weight of the polymeric composition.

29. A polymeric composition as claimed in any one of Claims 20 to 28, wherein the polyolefin wax or oil (b.ii) is present in an amount of from 0.1 to 2 weight percent, based on the total weight of the polymeric composition.

30. A polymeric composition as claimed in any one of Claims 21 to 29, wherein the extrusion formulation package is as defined in any one of Claims 2 to 17.

31. A polymeric composition as claimed in any one of Claims 21 to 30, wherein the vinylidene chloride interpolymer is present in an amount of from 93.6 to 98 weight percent, the extrusion formulation is present in an amount of from 6.4 to 2 weight percent and comprises from 0.4 to 2 weight percent of the metal salt of a weak acid; from 0.5 to 2 weight percent of said polyethylene; and at least one of (i) from 0.4 to 1.2 weight percent of the plasticizer (a); and (ii) at least one external lubricant selected from 0.2 to 0.3 weight percent of the oxidized polyolefin (b.i) and from 0.5 to 0.9 weight percent of the polyolefin wax or oil (b.ii), all weight percentages being based on the total weight of the polymeric composition.

32. A polymeric composition as claimed in any one of Claims 20 to 31, wherein the components of the extrusion formulation were added separately to the interpolymer.

33. A polymeric composition as claimed in any one of Claims 20 to 32, wherein the composition is in the form of a pellet.

34. A polymeric composition as claimed in any one of Claims 20 to 32, wherein the composition is in powder form.

35. A process for making an article from a vinylidene chloride interpolymer by casting, blowing, extrusion moulding, injection moulding, blow moulding, coextrusion, laminating, or calendering a polymeric composition as claimed in any one of Claims 20 to 34.

## Patentansprüche

1. Extrusionsformulierungspaket für thermisch empfindliches Vinylidenchloridinterpolymeres, gebildet aus einer Monomerenmischung, die 60 bis 99 Gew.-% Vinylidenchlorid und 40 bis 1 Gew.-% wenigstens eines hiermit copolymerisierbaren ethylenartig ungesättigten Comonomeren umfaßt, wobei dieses Formulierungspaket umfaßt: von 0,1 bis 95 Gew.-%, bezogen auf das Gesamtgewicht des Formulierungspaketes, eines Alkalimetallsalzes oder eines Erdalkalimetallsalzes einer schwachen Säure (d. h. einer als Protonendonor fähigen Substanz, die eine meßbare Dissoziationskonstante besitzt), ein zur Erniedrigung des Reibungskoeffizienten dieses Vinylidenchloridinterpolymeren fähiges Ethylenhomopolymeres, wobei dieses Polyethylen einen Polymerisationsgrad von wenigstens 715, einen Schmelzpunkt im dem Bereich von 70° C bis 175° C und eine Dichte in dem Bereich von 0,85 bis 1,1 hat, und wenigstens einen von (a) einem Weichmacher und (b) wenigstens einem äußeren Gleitmittel, ausgewählt aus (i) oxidierten Polyolefinen mit niedrigem Molekulargewicht mit einem durch Dampfphasenosmometrie bestimmten Zahlendurchschnittsmolekulargewicht von weniger als 5.000 und (ii) Polyolefinwachsen oder -ölen.

2. Formulierung nach Anspruch 1, worin das Metallsalz einer schwachen Säure Magnesiumhydroxid ist.

3. Formulierung nach Anspruch 1 oder Anspruch 2, worin das Metallsalz einer schwachen Säure in einer Menge von 8,3 bis 55,6 Gew.-%, bezogen auf das Gesamtgewicht des Formulierungspaketes, vorhanden ist.

4. Formulierung nach einem der vorhergehenden Ansprüche, worin dieses Polyethylen in einer Menge von 0,9 bis 99,5 Gew.-%, bezogen auf das Gesamtgewicht des Formulierungspaketes, vorhanden ist.

5. Formulierung nach Anspruch 4, worin dieses Polyethylen in einer Menge von 10,2 bis 57,1 Gew.-%, bezogen auf das Gesamtgewicht des Formulierungspaketes, vorhanden ist.

6. Formulierung nach einem der vorhergehenden Ansprüche, worin dieses Polyethylen ein Polyethylen hoher Dichte ist.

7. Formulierung nach einem der vorhergehenden Ansprüche, worin der Weichmacher (a) in einer Menge von bis zu 90,9 Gew.-%, bezogen auf das Gesamtgewicht des Formulierungspaketes, vorhanden ist.

8. Formulierung nach Anspruch 7, worin der Weichmacher (a) in einer Menge von 7,1 bis 42,9 Gew.-%, bezogen auf das Gesamtgewicht der Mischung, vorhanden ist.

9. Formulierung nach einem der vorhergehenden Ansprüche, worin der Weichmacher (a) aus epoxidierten Ölen und den Sebacaten ausgewählt ist.

10. Formulierung nach einem der vorhergehenden Ansprüche, worin das oxidierte Polyolefin (b.i) ein Zahlendurchschnittsmolekulargewicht von 1.000 bis 4.000, eine Säurezahl von 10 bis 35 und einen Erweichungspunkt von 85° C bis 145° C besitzt.

11. Formulierung nach einem der vorhergehenden Ansprüche, worin das oxidierte Polyolefin (b.i) in einer Menge von 0,1 bis 80 Gew.-% vorhanden ist.

12. Formulierung nach Anspruch 11, worin das oxidierte Polyolefin (b.i) in einer Menge von 3,2 bis 14,3 Gew.-% vorhanden ist.

13. Formulierung nach einem der vorhergehenden Ansprüche, worin das oxidierte Polyolefin (b.i) oxidiertes Polyethylen ist.

14. Formulierung nach einem der vorhergehenden Ansprüche, worin das Polyolefinwachs oder -öl (b.ii) in einer Menge von 0,2 bis 90,9 Gew.-%, bezogen auf das Gesamtgewicht der Mischung, vorhanden ist.

15. Formulierung nach Anspruch 14, worin das Polyolefinwachs oder -öl (b.ii) in einer Menge von 8,3 bis 37,5 Gew.-%, bezogen auf das Gesamtgewicht der Mischung, vorhanden ist.

16. Formulierung nach einem der vorhergehenden Ansprüche, worin das Polyolefinwachs oder -öl (b.ii) aus Polyethylenwachs und Paraffinwachs ausgewählt ist.

17. Formulierung nach einem der vorhergehenden Ansprüche, worin beide, ein oxidiertes Polyolefin (b.i) und ein Polyolefinwachs (b.ii), vorhanden sind.

18. Verwendung zur Verbesserung der thermischen Stabilität eines Vinylidenchloridinterpolymeren, gebildet aus einer Monomerenmischung, die 60 bis 99 Gew.-% Vinylidenchlorid und 40 bis 1 Gew.-% wenigstens eines hiermit copolymerisierbaren ethylenartig ungesättigten Comonomeren umfaßt, eines Extrusionsformulierungspaketes, das umfaßt: von 0,1 bis 95 Gew.-%, bezogen auf das Gesamtgewicht des Formulierungspaketes, eines Alkalimetallsalzes oder eines Erdalkalimetallsalzes einer schwachen Säure (d. h. einer als Protonendonor fähigen Substanz, die eine meßbare Dissoziationskonstante besitzt), ein zur Erniedrigung des Reibungskoeffizienten dieses Vinylidenchloridinterpolymeren fähiges Ethylenhomopolymeres, wobei dieses Polyethylen einen Polymerisationsgrad von wenigstens 715, einen Schmelzpunkt im dem Bereich von 70° C bis 175° C und eine Dichte in dem Bereich von 0,85 bis 1,1 hat, und wenigstens einen von (a) einem Weichmacher und (b) wenigstens einem äußeren Gleitmittel, ausgewählt aus (i) oxidierten Polyolefinen mit niedrigem Molekulargewicht mit einem durch Dampfphasenosmometrie bestimmten Zahlendurchschnittsmolekulargewicht von weniger als 5.000 und (ii) Polyolefinwachsen oder -ölen.

19. Verwendung nach Anspruch 18, worin das Extrusionsformulierungspaket wie in einem der Ansprüche 2 bis 17 definiert ist.

20. Polymere Zusammensetzung, umfassend ein Vinylidenchloridinterpolymeres, gebildet aus einer Monomerenmischung, die 60 bis 99 Gew.-% Vinylidenchlorid und 40 bis 1 Gew.-% wenigstens eines hiermit copolymerisierbaren ethylenartig ungesättigten Comonomeren umfaßt, vermischt mit einem Extrusionsformulierungspaket in einer Menge von 0,3 bis 40,2 Gew.-% (bezogen auf das Gesamtgewicht der gemischten polymeren Zusammensetzung) zur Verbesserung der thermischen Stabilität dieses Interpolymeren während Extrusion, wobei dieses Formulierungspaket umfaßt: von 0,1 bis 95 Gew.-%, bezogen auf das Gesamtgewicht des Formulierungspaketes, eines Alkalimetallsalzes oder eines Erdalkalimetallsalzes einer schwachen Säure (d. h. einer als Protonendonor fähigen Substanz, die eine meßbare Dissoziationskonstante besitzt), ein zur Erniedrigung des Reibungskoeffizienten dieses Vinylidenchloridinterpolymeren fähiges Ethylenhomopolymeres, wobei dieses Polyethylen einen Polymerisationsgrad von wenigstens 715, einen Schmelzpunkt im dem Bereich von 70° C bis 175° C und eine Dichte in dem Bereich von 0,85 bis 1,1 hat, und wenigstens einen von (a) einem Weichmacher und (b) wenigstens einem äußeren Gleitmittel, ausgewählt aus (i) oxidierten Polyolefinen mit niedrigem Molekulargewicht mit einem durch Dampfphasenosmometrie bestimmten Zahlendurchschnittsmolekulargewicht von weniger als 5.000 und (ii) Polyolefinwachsen oder -ölen.

21. Polymere Zusammensetzung nach Anspruch 20, umfassend:
(A) von 59,8 bis 99,7 Gew.-%, bezogen auf das Gesamtgewicht der polymeren Zusammensetzung, dieses Vinylidenchloridinterpolymeren, gemischt mit
(B) von 40,2 bis 0,3 Gew.-%, bezogen auf das Gesamtgewicht der polymeren Zusammensetzung, dieses Extrusionsformulierungspaketes, umfassend von 0,05 bis 5 Gew.-%, bezogen auf das Gesamtgewicht der polymeren Zusammensetzung, des Metallsalzes einer schwachen Säure.

22. Polymere Zusammensetzung nach Anspruch 20 oder Anspruch 21, worin das Vinylidenchloridinterpolymere in einer Menge von 78,1 bis 99,1 Gew.-% vorhanden ist und das Extrusionsformulierungspaket in einer Menge von 21,9 bis 0,9 Gew.-% vorhanden ist, wobei diese Gewichtsprozentsätze auf dem Gesamtgewicht der polymeren Zusammensetzung basieren.

23. Polymere Zusammensetzung nach Anspruch 22, worin das Vinylidenchloridinterpolymere in einer Menge von 93,6 bis 98 Gew.-% vorhanden ist und das Extrusionsformulierungspaket in einer Menge von 6,4 bis 2 Gew.-% vorhanden ist, wobei diese Gewichtsprozentsätze auf dem Gesamtgewicht der polymeren Zusammensetzung basieren.

24. Polymere Zusammensetzung nach einem der Ansprüche 20 bis 23, worin das mit dem Vinylidenchlorid copolymerisierbare ethylenartig ungesättigte Comonomere ein Alkylacrylat oder -methacrylat mit 1 bis 8 Kohlenstoffatomen pro Alkylgruppe ist.

25. Polymere Zusammensetzung nach einem der Ansprüche 20 bis 23, worin das mit dem Vinylidenchlorid copolymerisierbare Monomere Vinylchlorid ist.

26. Polymere Zusammensetzung nach einem der Ansprüche 20 bis 25, worin dieses Polyethylen in einer Menge von 0,1 bis 40 Gew.-%, bezogen auf das Gesamtgewicht der polymeren Zusammensetzung, vorhanden ist.

27. Polymere Zusammensetzung nach einem der Ansprüche 20 bis 25, worin der Weichmacher (a) in einer Menge bis zu 3 Gew.-%, bezogen auf das Gesamtgewicht der polymeren Zusammensetzung, vorhanden ist.

28. Polymere Zusammensetzung nach einem der Ansprüche 20 bis 27, worin das oxidierte Polyolefin (b.i) in einer Menge von 0,05 bis 1 Gew.-%, bezogen auf das Gesamtgewicht der polymeren Zusammensetzung, vorhanden ist.

29. Polymere Zusammensetzung nach einem der Ansprüche 20 bis 28, worin das Polyolefinwachs oder -öl (b.ii) in einer Menge von 0,1 bis 2 Gew.-%, bezogen auf das Gesamtgewicht der polymeren Zusammensetzung, vorhanden ist.

30. Polymere Zusammensetzung nach einem der Ansprüche 21 bis 29, worin das Extrusionsformulierungspaket wie in einem der Ansprüche 2 bis 17 definiert ist.

31. Polymere Zusammensetzung nach einem der Ansprüche 21 bis 30, worin das Vinylidenchloridinterpolymere in einer Menge von 93,6 bis 98 Gew.-% vorhanden ist, die Extrusionsformulierung in einer Menge von 6,4 bis 2 Gew.-% vorhanden ist und umfaßt: von 0,4 bis 2 Gew.-% des Metallsalzes einer schwachen Säure, von 0,5 bis 2 Gew.-% dieses Polyethylens und wenigstens einen von (i) von 0,4 bis 1,2 Gew.-% des Weichmachers (a) und (ii) wenigstens ein äußeres Gleitmittel, ausgewählt aus 0,2 bis 0,3 Gew.-% des oxidierten Polyolefins mit niedrigem Molekulargewicht (b.i) und aus 0,5 bis 0,9 Gew.-% des Polyolefinwachses oder -öles (b.ii), wobei alle Gewichtsprozentsätze auf dem Gesamtgewicht der polymeren Zusammensetzung basieren.

32. Polymere Zusammensetzung nach einem der Ansprüche 20 bis 31, worin die Komponenten der Extrusionsformulierung getrennt zu dem Interpolymeren zugesetzt wurden.

33. Polymere Zusammensetzung nach einem der Ansprüche 20 bis 32, worin die Zusammensetzung in Form eines Pellets vorliegt.

34. Polymere Zusammensetzung nach einem der Ansprüche 20 bis 32, worin die Zusammensetzung in Pulverform vorliegt.

35. Verfahren zur Herstellung eines Artikels aus einem Vinylidenchloridinterpolymeren durch Gießen, Blasen, Extrusionsformen, Spritzgießen, Blasformen, Coextrusion, Laminieren oder Kalandrieren einer polymeren Zusammensetzung wie in einem der Ansprüche 20 bis 34 beansprucht.

## Revendications

1. Formulation unitaire d'adjuvants pour l'extrusion d'interpolymères de chlorure de vinylidène thermosensibles, formés à partir d'un mélange de monomères qui contient de 60 à 99 % en poids de chlorure de vinylidène et de 40 à 1 % en poids d'au moins un comonomère à insaturation éthylénique, conjointement polymérisable, ladite formulation unitaire comprenant :
- de 0,1 à 95 % en poids, par rapport au poids total de la formulation unitaire, d'un sel de métal alcalin ou alcalino-terreux et d'acide faible, c'est-à-dire d'un corps qui peut céder des protons et qui présente une constante de dissociation mesurable,
- un homopolymère d'éthylène qui peut abaisser le coefficient de frottement dudit interpolymère de chlorure de vinylidène, et dont le degré de polymérisation vaut au moins 175, le point de fusion se trouve dans l'intervalle allant de 70°C à 175°C et la densité vaut de 0,85 à 1,1,
- et au moins l'un des composants suivants :
a) un plastifiant, et
b) au moins un lubrifiant externe choisi parmi
i) les polyoléfines oxydées à faible masse molaire, dont la masse molaire moyenne en nombre, déterminée par osmométrie en phase gazeuse, est inférieure à 5000, et
ii) les cires ou huiles de polyoléfines.

2. Formulation conforme à la revendication 1, dans laquelle le sel de métal et d'acide faible est de l'hydroxyde de magnésium.

3. Formulation conforme à la revendication 1 ou 2, dans laquelle le sel de métal et d'acide faible se trouve en une proportion pondérale, rapportée au poids total de la formulation unitaire, de 8,3 à 55,6 %.

4. Formulation conforme à l'une des revendications précédentes, dans laquelle ledit polyéthylène se trouve en une proportion pondérale, rapportée au poids total de la formulation unitaire, de 0,9 à 99,5 %.

5. Formulation conforme à la revendication 4, dans laquelle ledit polyéthylène se trouve en une proportion pondérale, rapportée au poids total de la formulation unitaire, de 10,2 à 57,1 %.

6. Formulation conforme à l'une des revendications précédentes, dans laquelle ledit polyéthylène est un polyéthylène haute densité.

7. Formulation conforme à l'une des revendications précédentes, dans laquelle le plastifiant (a) se trouve en une proportion pondérale, rapportée au poids total de la formulation unitaire, valant jusqu'à 90,9 %.

8. Formulation conforme à la revendication 7, dans laquelle le plastifiant (a) se trouve en une proportion pondérale, rapportée au poids total du mélange, de 7,1 à 42,9 %.

9. Formulation conforme à l'une des revendications précédentes, dans laquelle le plastifiant (a) est choisi parmi les huiles époxydées et les sébaçates.

10. Formulation conforme à l'une des revendications précédentes, dans laquelle on utilise une polyoléfine oxydée (b.i) dont la masse molaire moyenne en nombre vaut de 1000 à 4000, l'indice d'acide vaut de 10 à 35 et le point de ramollissement vaut de 85°C à 145°C.

11. Formulation conforme à l'une des revendications précédentes, dans laquelle la polyoléfine oxydée (b.i) se trouve en une proportion pondérale de 0,1 à 80 %.

12. Formulation conforme à la revendication 11, dans laquelle la polyoléfine oxydée (b.i) se trouve en une proportion pondérale de 3,2 à 14,3 %.

13. Formulation conforme à l'une des revendications précédentes, dans laquelle la polyoléfine oxydée (b.i) est un polyéthylène oxydé.

14. Formulation conforme à l'une des revendications précédentes, dans laquelle la cire ou huile de polyoléfine (b.ii) se trouve en une proportion pondérale, rapportée au poids total du mélange, de 0,2 à 90,9 %.

15. Formulation conforme à la revendication 14, dans laquelle la cire ou huile de polyoléfine (b.ii) se trouve en une proportion pondérale, rapportée au poids total du mélange, de 8,3 à 37,5 %.

16. Formulation conforme à l'une des revendications précédentes, dans laquelle la cire ou huile de polyoléfine (b.ii) est choisie parmi de la cire de polyéthylène et de la cire de paraffine.

17. Formulation conforme à l'une des revendications précédentes, dans laquelle il y a à la fois une polyoléfine oxydée (b.i) et une cire de polyoléfine (b.ii).

18. Utilisation, pour améliorer la stabilité thermique d'un interpolymère de chlorure de vinylidène formé à partir d'un mélange de monomères qui contient de 60 à 99 % en poids de chlorure de vinylidène et de 40 à 1 % en poids d'au moins un comonomère à insaturation éthylénique, conjointement polymérisable, d'une formulation unitaire d'adjuvants d'extrusion, qui comprend :
- de 0,1 à 95 % en poids, par rapport au poids total de la formulation unitaire, d'un sel de métal alcalin ou alcalino-terreux et d'acide faible, c'est-à-dire d'un corps qui peut céder des protons et qui présente une constante de dissociation mesurable,
- un homopolymère d'éthylène qui peut abaisser le coefficient de frottement dudit interpolymère de chlorure de vinylidène, et dont le degré de polymérisation vaut au moins 175, le point de fusion se trouve dans l'intervalle allant de 70°C à 175°C et la densité vaut de 0,85 à 1,1,
- et au moins l'un des composants suivants :
a) un plastifiant, et
b) au moins un lubrifiant externe choisi parmi
i) les polyoléfines oxydées à faible masse molaire, dont la masse molaire moyenne en nombre, déterminée par osmométrie en phase gazeuse, est inférieure à 5000, et
ii) les cires ou huiles de polyoléfines.

19. Utilisation, conforme à la revendication 18, d'une formulation unitaire d'adjuvants d'extrusion conforme à l'une des revendications 2 à 17.

20. Composition de polymère qui comprend un interpolymère de chlorure de vinylidène, formé à partir d'un mélange de monomères qui contient de 60 à 99 % en poids de chlorure de vinylidène et de 40 à 1 % en poids d'au moins un comonomère à insaturation éthylénique, conjointement polymérisable, et mélangé avec de 0,3 à 40,2 % en poids, par rapport au poids total du mélange constituant la composition de polymère, d'une formulation unitaire d'adjuvants d'extrusion dont le rôle est d'améliorer la stabilité thermique dudit interpolymère au cours d'une opération d'extrusion et qui comprend :
- de 0,1 à 95 % en poids, par rapport au poids total de la formulation unitaire, d'un sel de métal alcalin ou alcalino-terreux et d'acide faible, c'est-à-dire d'un corps qui peut céder des protons et qui présente une constante de dissociation mesurable,
- un homopolymère d'éthylène qui peut abaisser le coefficient de frottement dudit interpolymère de chlorure de vinylidène, et dont le degré de polymérisation vaut au moins 175, le point de fusion se trouve dans l'intervalle allant de 70°C à 175°C et la densité vaut de 0,85 à 1,1,
- et au moins l'un des composants suivants :
a) un plastifiant, et
b) au moins un lubrifiant externe choisi parmi
i) les polyoléfines oxydées à faible masse molaire, dont la masse molaire moyenne en nombre, déterminée par osmométrie en phase gazeuse, est inférieure à 5000, et
ii) les cires ou huiles de polyoléfines.

21. Composition de polymère, conforme à la revendication 20, qui comprend
A) de 59,8 à 99,7 % en poids, par rapport au poids total de la composition de polymère, dudit interpolymère de chlorure de vinylidène, mélangé avec
B) de 40,2 à 0,3 % en poids, par rapport au poids total de la composition de polymère, d'une formulation unitaire d'adjuvants d'extrusion dudit type, qui contient de 0,05 à 5 % en poids, par rapport au poids total de la composition de polymère, d'un sel de métal et d'acide faible.

22. Composition de polymère, conforme à la revendication 20 ou 21, dans laquelle l'interpolymère de chlorure de vinylidène se trouve en une proportion pondérale de 78,1 à 99,1 % et la formulation unitaire d'adjuvants d'extrusion se trouve en une proportion pondérale de 21,9 à 0,9 %, ces proportions pondérales étant rapportées au poids total de la composition de polymère.

23. Composition de polymère, conforme à la revendication 22, dans laquelle l'interpolymère de chlorure de vinylidène se trouve en une proportion pondérale de 93,6 à 98 % et la formulation unitaire d'adjuvants d'extrusion se trouve en une proportion pondérale de 6,4 à 2 %, ces proportions pondérales étant rapportées au poids total de la composition de polymère.

24. Composition de polymère, conforme à l'une des revendications 20 à 23, dans laquelle le comonomère à insaturation éthylénique qui peut copolymériser avec du chlorure de vinylidène est un acrylate ou méthacrylate d'alkyle dont le groupe alkyle comporte de 1 à 8 atomes de carbone.

25. Composition de polymère, conforme à l'une des revendications 20 à 23, dans laquelle le monomère qui peut copolymériser avec du chlorure de vinylidène est du chlorure de vinyle.

26. Composition de polymère, conforme à l'une des revendications 20 à 25, dans laquelle ledit polyéthylène se trouve en une proportion pondérale, rapportée au poids total de la composition de polymère, de 0,1 à 40 %.

27. Composition de polymère, conforme à l'une des revendications 20 à 26, dans laquelle le plastifiant (a) se trouve en une proportion pondérale, rapportée au poids total de la composition de polymère, valant jusqu'à 3 %.

28. Composition de polymère, conforme à l'une des revendications 20 à 27, dans laquelle la polyoléfine oxydée (b.i) se trouve en une proportion pondérale, rapportée au poids total de la composition de polymère, de 0,05 à 1 %.

29. Composition de polymère, conforme à l'une des revendications 20 à 28, dans laquelle la cire ou huile de polyoléfine (b.ii) se trouve en une proportion pondérale, rapportée au poids total de la composition de polymère, de 0,1 à 2 %.

30. Composition de polymère, conforme à l'une des revendications 21 à 29, dans laquelle la formulation unitaire d'adjuvants d'extrusion est conforme à l'une des revendications 2 à 17.

31. Composition de polymère, conforme à l'une des revendications 21 à 30, dans laquelle l'interpolymère de chlorure de vinylidène se trouve en une proportion de 93,6 à 98 % en poids, et la formulation d'adjuvants d'extrusion se trouve en une proportion de 6,4 à 2 % en poids et comprend de 0,4 à 2% en poids d'un sel de métal et d'acide faible, de 0,5 à 2 % en poids dudit polyéthylène, et au moins l'un des composants suivants :
i) de 0,4 à 1,2 % en poids de plastifiant (a), et
ii) au moins un lubrifiant externe, choisi parmi
- de 0,2 à 3 % en poids d'une polyoléfine oxydée (b.i), et
- de 0,5 à 0,9 % en poids d'une cire ou huile de polyoléfine (b.ii), tous ces pourcentages pondéraux étant rapportés au poids total de la composition de polymère.

32. Composition de polymère, conforme à l'une des revendications 20 à 31, dans laquelle les composants de la formulation d'adjuvants d'extrusion ont été ajoutés séparément à l'interpolymère.

33. Composition de polymère, conforme à l'une des revendications 20 à 32, qui se présente sous forme de pastilles.

34. Composition de polymère, conforme à l'une des revendications 20 à 32, qui se présente sous forme de poudre.

35. Procédé de fabrication d'une pièce en interpolymère de chlorure de vinylidène, par coulée, soufflage, moulage par extrusion, moulage par injection, moulage par soufflage, coextrusion, stratification ou calandrage d'une composition de polymère conforme à l'une des revendications 20 à 34.
